Europäisches Patentamt

**European Patent Office**

**Office européen des brevets**

(11) Publication number: **0 173 789**

**A2**

(12) **EUROPEAN PATENT APPLICATION**

(21) Application number: **85101248.4**

(22) Date of filing: **06.02.85**

(51) Int. Cl.⁴: **C 08 F 2/22**
**C 08 F 291/00, C 08 F 265/04**

(30) Priority: **04.09.84 JP 183814/84**

(43) Date of publication of application:
**12.03.86 Bulletin 86/11**

(84) Designated Contracting States:
**DE FR GB NL**

(71) Applicant: **DAINIPPON INK AND CHEMICALS, INC.**
**35-58, Sakashita 3-chome**
**Itabashi-ku, Tokyo 174(JP)**

(72) Inventor: **Takarabe, Kunihide**
**3-2-506, Oichihara-cho**
**Izumi-ohtsu-shi Osaka-fu(JP)**

(72) Inventor: **Yoshino, Fumio**
**808-918, Higashigaoka-cho**
**Kishiwada-shi Osaka-fu(JP)**

(72) Inventor: **Tabata, Mitinobu**
**1-16-3, Kusune**
**Higashi-osaka-shi Osaka-fu(JP)**

(74) Representative: **Dr. E. Wiegand Dipl.-Ing. W. Niemann**
**Dr. M. Kohler Dipl.-Ing. J. Glaeser Dr. H.-R. Kressin**
**Patentanwälte**
**Herzog-Wilhelm-Strasse 16**
**D-8000 München 2(DE)**

(54) **Process for producing emulsion of vinyl resin having microvoids therein, and process for its powderization.**

(57) A process for producing an emulsion of a vinyl resin having microvoids therein, which comprises using as seed particles 0.1 to 90 parts by weight (as solids) of a polymer emulsion (C) obtained by emulsion polymerization of a polymerizable monovinyl monomer (A) and optionally, a polyfunctional crosslinkable monomer (B), adding to said seed particles a monomeric mixture which is composed of 99.9 to 10 parts by weight of a polymerizable monovinyl monomer (D) and 0 to 50 parts by weight of a polyfunctional crosslinkable monomer (E) and the solubility parameter of which differs from the solubility parameter of the polymer (C) by at least 0.1, and emulsion polymerizing the monomeric mixture. The resulting resin emulsion may be powderized by drying.

This invention relates to a process for producing an emulsion of a resin having microvoids therein and a process for its powderization. The resin emulsion is useful in paints, various coating agents for paper, woven fabrics, leathers, etc., and various additives.

In recent years, methods have been proposed for the production of non-film forming bead-like resin particles having microvoids. For example, Australian Patent No. 455,277 discloses an emulsion of a non-film forming resin having microvoids therein prepared by suspending an aqueous dispersion of a pigment by dropping in a solution of an unsaturated polyester containing an unsaturated monomer such as styrene, dispersing the resulting suspension in the form of beads in water, then polymerizing the beads, and adding a water-soluble polymer such as partially hydrolyzed polyvinyl acetate to stabilize the polymer emulsion. Japanese Laid-Open Patent Publication No. 129,485/1976 proposes an improvement over the above emulsion by using an unsaturated polyester resin having a polyethylene oxide chain without adding a water-soluble polymer. Coating compositions comprising these non-film forming resin emulsions have excellent hiding powder, but have the defect of giving coated films having no gloss.

U. S. Patent No. 3,152,280 discloses a process for producing a non-film forming emulsion of a vinyl resin having microvoids therein, which comprises using core particles obtained by copolymerizing an alpha,beta-ethylenically unsaturated carboxylic acid or its salt to an extent of at least 5 % by weight, then adding at least one monoethylenically unsaturated sheath monomer capable of forming a sheath polymer, polymerizing the monomer, and then neutralizing and swelling the core polymer with an aqueous volatile base. A coating composition comprising the resulting non-film forming resin emulsion neutralized and swollen with the aqueous volatile base has hiding power, but gives a coated film having poor gloss and unsatisfactory durability, particularly in weatherability and alkali resistance.

There was also proposed a process for producing an emulsion of a non-film forming resin having microvoids without using the aforesaid carboxylic acid monomers [J. Polym. Sci., Polymer. Lett. Edn., 19, 143(1981)]. In this proposal, a sheath polymer is formed by emulsion polymerizing styrene on core particles of a poly(methylmethacrylate) emulsion. A non-film forming resin emulsion having a core/sheath weight ratio of 1:2 and a nonvolatile content of 15 % is obtained, and its structure is indirectly observed by its electron microphotograph.

Such a non-film forming resin emulsion containing microvoids and having a low solids content has poor practical utility in respect of miscibility and mechanical stability during paint formulation because the emulsion polymerization is not sufficient.

According to this invention, there are provided a process for producing an emulsion of a vinyl resin having microvoids therein, which comprises using as seed particles 0.1 to 90 parts by weight (as solids) of a polymer emulsion (C) obtained by emulsion polymerization of a polymerizable monovinyl monomer (A) and optionally, a polyfunctional crosslinkable monomer (B), adding to said seed particles a monomeric mixture which is composed of 99.9 to 10 parts by weight of a polymerizable monovinyl monomer (D) and 0 to 50 parts by weight of a polyfunctional crosslinkable monomer (E) and the solubility parameter of which differs from the solubility parameter of the polymer (C) by at least 0.1, and emulsion polymerizing the monomeric mixture; and a process for powderizing the resin emulsion.

The polymerizable monovinyl monomers (A) and (D) used in this invention denote monomers having one polymerizable vinyl group in the molecule. Specific examples include (meth)acrylic esters such as methyl-, ethyl-, propyl-, n-butyl-, i-butyl-, t-butyl-, n-amyl-, i-amyl-, hexyl-, octyl-, nonyl-, decyl-, dodecyl-, octadecyl-, cyclohexyl-, phenyl- or benzyl-(meth)-acrylate; vinyl esters such as vinyl acetate, vinyl propionate, vinyl butyrate, and "vinyl Versatate"; vinyl ethers such as methyl-, ethyl-, propyl-, butyl-, amyl- or hexyl-vinyl ether; vinyl cyanides such as acrylonitrile; vinyl halides such as vinyl chloride or vinylidene chloride; dialkyl esters of unsaturated dibasic acids such as dialkyl esters of maleic acid, fumaric acid and itaconic acid; olefins such as ethylene, styrene or vinyltoluene; dienes such as ethylene or butadiene; unsaturated acids such as alpha,beta-ethylenically unsaturated carboxylic acid, vinylsulfonic acid or styrenesulfonic acid, or salts thereof; glycidyl compounds such as (methyl)glycidyl (meth)acrylate; an N-methylolated product of (meth)acrylamide or its alkoxylated product; silane group-containing alpha,beta-ethylenically unsaturated monomers such as vinyltrichlorosilane or vinyltriethoxysilane; and hydroxyl group-containing alpha,beta-ethylenically unsaturated monomers such as beta-hydroxyethyl (meth)acrylate. These monomers may be used singly or in combination.

Each of the polymerizable monovinyl monomers (A) and (D) used in this invention conveniently contains less than 5 %, preferably not more than 4.5 %, more preferably not more than 3.5 %, based on its weight, of an alpha, beta-ethylenically unsaturated carboxylic acid or its salt because its inclusion leads to the formation of a non-film forming resin having increased water resistance and alkali resistance.

The polyfunctional crosslinkable monomers (B)

- 4 -

and (E) denote monomers having at least 2 polymerizable unsaturated bonds in the molecule. Specific examples include ethylene glycol dimethacrylate, 1,3-butylene glycol dimethacrylate, 1,4-butylene glycol dimethacrylate, propylene glycol dimethacrylate, divinylbenzene, trivinylbenzene, diallyl phthalate, ethylene glycol diacrylate, and 1,3-butylene glycol diacrylate. Of these, ethylene glycol dimethacrylate, propylene glycol dimethacrylate, divinylbenzene, trivinylbenzene, diallyl phthalate and ethylene glycol diacrylate are preferred.

The solubility parameter of each of the polymerizable vinyl monomer (D) and the polyfunctional crosslinkable polymer (E) used in this invention differs from that of the polymer emulsion (C) used as seed particles, substantially the constituent monomers of the polymer (C), by at least 0.1, preferably by 0.1 to 10.

The solubility parameter is calculafted, for example, in accordance with the following equation.

$$\delta = d \cdot \Sigma Gi/M$$

where $\delta$ is the solubility parameter, d is the specific gravity, Gi is the attraction constant of the i structure, and M is the molecular weight,

as shown in Small, P. S., J. Appl. Chem., 3, 75 (1973).

The amount of the polyfunctional crosslinkable monomer (B) used to produce the polymer emulsion (C) as seed particles is 0 to 50 parts by weight, preferably 0.1 to 30 parts by weight, per 100 parts by weight of the sum of the polymerizable monovinyl monomer (A) and (B). The amount of the polyfunctional crosslinkable monomer (E) used after formation of the seed particles is preferably 0 to 50 parts by weight, especially preferably 0.1 to 30 parts by weight, per 100 parts by weight of the sum of the monomers (E) and (D). The use of the polyfunctional crosslinkable monomer (E) increases the solvent resistance of the vinyl resin particles. However, if its amount exceeds 50 parts by weight, it is difficult to produce the vinyl resin emulsion.

Usually, an emulsifying agent and a catalyst are used in the production of the vinyl resin emulsion. Suitable emulsifiers are substances having surface-activating ability such as anionic emulsifiers, nonionic emulsifiers, cationic emulsifiers, reactive emulsifiers and acrylic oligomers. They may be used either singly or in combination. Of these, the nonionic and anionic emulsifiers are preferred because they reduce the formation of agglomerates during the polymerization and can give a stable emulsion. The nonionic emulsifiers may be commercial nonionic emulsifiers such as polyoxyethylene alkyl phenol ethers, polyoxyethylene alkyl ethers, polyoxyethylene higher fatty acid esters and ethylene oxide/propylene oxide block copolymer. The anionic emulsifiers may be commercial anionic emulsifiers such as alkali alkylbenzenesulfonates, alkyl sulfate alkali salts, and polyoxyethylene alkylphenol sulfate alkali salts. Water-soluble oligomers may also be used in place of, or in combination with, the anionic emulsifiers. Water-soluble oligomers composed of polycarboxylic acids or sulfonic acid salts are commercially available and can be easily utilized. By using it, it is possible to obtain a so-called soap-free emulsion composition. Protective colloids frequently used in emulsion polymerization may also be used. The protective colloids may, for example, be water-soluble polymeric substances such as polyvinyl alcohol and hydroxyethyl cellulose. When such a protective colloid is used in emulsion polymerization, the resulting emulsion particles have a large particle diameter and the resulting emulsion has good hiding power. But at the same time, the presence of such a protective colloid reduces the water resistance and weatherability of the resulting coated film. Accordingly, when it is used, its amount should be limited to not more than 5 parts by weight, preferably not more than 2 parts by weight, per 100 parts of the entire monomers.

The emulsifier is used without fail in the production of the polymer emulsion (C) as seed particles. In the subsequent polymerization, it may or may not be added freshly. Usually, it is preferred not to add it anew. The amount of the emulsifier is not particularly restricted, but usually, it is about 0.1 to 10 parts by weight per 100 parts by weight of the entire monomers.

Any catalysts which are generally used in emulsion polymerization can be used in this invention. Typical examples include water-soluble inorganic peroxides or persulfates such as hydrogen peroxide and ammonium persulfate; organic peroxides such as cumene hydroperoxide and benzoyl peroxide; and azo compounds such as azobisisobutyronitrile. They may be used either singly or in combination. The amount of the catalyst is about 0.1 to 2 % based on the total weight of the monomers.

Of course, there may be employed a method generally known as a redox polymerization method which involves using the catalyst, a metal ion and a reducing agent.

The various monomers described above may be added at a time, or in divided portions, or continuously. They are polymerized in the presence of the above catalyst at a temperature of 0 to 100 $^{\circ}$C, and for practical purposes, 30 to 90 $^{\circ}$C.

The polymer emulsion (C) used in this invention is usually prepared by using the aforesaid monomers, emulsifier, catalyst, etc. and preferably contains 5 to 65 % by weight, as solids, of resin particles being free from microvoids therein and having a particle diameter of about 0.01 to 1.0 micron. The amount of the emulsion (C) used is such that the weight ratio of the emulsion (C) (solids)/the polymerizable vinyl monomer (D) is from 0.1/99.9 to 90/10, preferably from 0.5/99.5 to 70/30.

It is theorized that when the polymerizable vinyl monomer and optionally the polyfunctional crosslinkable monomer are added to the polymer emulsion (C) and polymerized in this invention, the monomers swell the resin particles in the polymer emulsion (C) and then polymerized thereby giving an emulsion of vinyl resin particles having microvoids therein.

The resulting vinyl resin emulsion contains resin particles in the form of a core having microvoids therein. The microvoids may be vacant or occupied by water. When water is present in the microvoids, it evaporates during drying. The vinyl resin particles usually have a particle diameter of 0.1 to 5.0 microns, preferably 0.2 to 1.0 micron, and the microvoids therein usually have a particle diameter of 0.01 to 1.0 micron, preferably 0.02 to 0.5 micron.

The solids concentration of the vinyl resin emulsion of this invention is not particularly restricted. Generally, the suitable concentration is 5 to 70 % by weight, preferably 20 to 60 % by weight. If its concentration is less than 5 % by weight, the hiding power of the emulsion is insufficient. If it exceeds 70 % by weight, the emulsion is difficult to produce.

Whether or not the resin particles in core form of the vinyl resin emulsion have microvoids can be easily determined. For example, the presence of microvoids can be detected by observing the emulsion itself, or a coated film prepared from a paint containing the emulsion, under a transmission-type or scanning-type electron microscope. It can also be determined by measuring the specific gravity of the emulsion.

The vinyl resin emulsion of this invention can be powderized by drying. The powderization may be carried out by the generally practiced methods of powderizing emulsions. For example, it can be effected by spray drying at a temperature of 135 to 155 $^{\circ}$C, tray drying at a temperature of 50 to 70 $^{\circ}$C (in a hot air atmosphere), fluidized bed drying, etc. Before drying, the solids concentration of the emulsion is preferably about 20 to 60 % by weight.

The vinyl resin powder obtained is an agglomerate of several to several hundred resin particles under general conditions, although this varies depending upon the powderization conditions. It usually has a diameter of about 1 to 50 microns. The microvoid diameters of the individual resin particles agglomerated scarcely differ from those before powderization. Such a powder can be easily re-dispersed in water or oil by optionally adding a dispersing agent such as an emulsifier or a protective colloid and mechanically stirring.

Generally, the resulting vinyl resin emulsion is non-film forming although it depends upon the selection of the monomers. The non-film forming vinyl resin emulsion can be easily powderized unless it is heated to a temperature above the melting point of the resin.

In the production of the non-film forming vinyl resin emulsion in this invention, the resin component preferably has a glass transition temperature (Tg) of at least 40 $^{\circ}$C, especially preferably at least 60 $^{\circ}$C. If its Tg is less than 40 $^{\circ}$C, the resulting emulsion forms a film and voids disappear. Thus, its hiding powder is insufficient. When Tg is at least 40 $^{\circ}$C, there is no likelihood of film formation at room temperature, and the resulting emulsion can exhibit its good hiding powder.

In the present invention, a film-forming vinyl resin emulsion may be formed by using the non-film forming vinyl resin emulsion. For example, it can be performed by using the non-forming vinyl resin emulsion as seed particles, adding a polymerizable vinyl monomer whose polymer has a Tg of less than 40 $^{\circ}$C to the seed particles and emulsion polymerizing it. Since the resulting film-forming vinyl resin emulsion has hiding power and film formability, it is useful in paint applications. A dried film of the film-forming vinyl resin emulsion is of a sea-and-island structure in which the sea portion is a film-forming component and the island portion is a non-film forming component.

The vinyl resin emulsion and its powder obtained in this invention have excellent hiding powder, and when added to a paint for example, can give coated films having excellent properties such as excellent gloss, water resistance, alkali resistance and weatherability. When a part (not more than 30 % by volume) of titanium oxide generally added to paints is replaced by the above emulsion or its powder, the hiding power further increases and a coated film having a high gloss retention can be obtained. If the product of this invention is an emulsion, a water-base paint is used. If it is a powder, paints of any forms can be used. Examples of vehicles for such paints are water-soluble, water-dispersible and solvent-soluble vinyl resins, oil-modified or non-modified alkyl resins, unsaturated polyester resins and polyurethane resins. Of these, the vinyl resins are preferred. Such vinyl resins may be prepared from the same polymerizable monovinyl compounds as used in this invention.

The vinyl resin emulsion and its powder obtained in this invention may be added to paper coating agents, paper-making organic filler pigments, cosmetics, inks, adhesives, tackifiers, sealing agents for leather, primers and agents for improving the abrasion resistance of woven fabrics. The powder may be mixed with molding resins such as polyvinyl chloride, polyesters, polystyrene, polyethylene and polypropylene and they are molded into sundries, toys, industrial component parts, electrical component parts, etc. When the emulsion is applied to paper or cloths, there can be obtained artificial leathers, carpets, apparels, waterproof sheets, etc. When it is applied to a metal plate, an anticorrosive metal plate (pre-coated metal) can be obtained.

The following Examples and Comparative Examples illustrate the present invention more specifically. The parts and percentages in these examples are by weight unless otherwise specified. All polymerizations were carried out in an atmosphere of an inert gas $(N_2)$.

## EXAMPLE 1

Water (100 parts) and 5 parts of an emulsifier (a mixture of 3 parts of Emulgen 120 manufactured by Kao-Atlas Co., Ltd. and 2 parts of Emal 20A manufactured by the same company) were added to a reaction vessel equipped with a stirrer, reflux condenser, dropping funnel and thermometer, and well stirred. Then, the reaction vessel was heated and the contents were maintained at 80 °C. A mixture of 20 parts of acrylonitrile, 10 parts of n-butyl acrylate and 5 parts of ethylene glycol dimethacrylate and a mixture of 0.25 part of ammonium persulfate and 5 parts of water were introduced into the reaction vessel over the course of about 1 hour and reacted. The reaction mixture was aged for 1 hour. Then, the inside of the reaction vessel was maintained at 80 °C, and a mixture of 52 parts of styrene, 10 parts of alpha-methylstyrene, 2 parts of methacrylic acid and 1 part of divinylbenzene and a mixture of 0.25 part of ammonium persulfate and 5 parts of water were introduced into the reaction vessel over the course of about 1 hour, and reacted. The reaction mixture was aged for 45 minutes, cooled, and adjusted to pH 8.6 by adding 3.0 parts of 25% aqueous ammonia.

- 11 -

The resulting emulsion had a solids concentration of 48.0 %, a viscosity (measured at 25 $^{O}$C by a BM-type rotating viscometer using rotor No. 1 at a rotating speed of 60 rpm) of 15 cps, a pH of 8.6, an average particle diameter, measured by an electron microscope, of 0.4 micrometer and a microvoid diameter of 0.1 to 0.2 micromketer. This emulsion is designated as A-1.

EXAMPLE 2

The same reaction vessel as used in Example 1 was charged with 100 parts of water and 7 parts of an emulsifier (a mixture of 3 parts of Emulgen 920, 2 parts of Emulgen 120 and 2 parts of Hitenol N-08), and the inside of the reaction vessel was maintained at 70 $^{O}$C. A mixture of 0.2 part of ammonium persulfate and 5 parts of water, a mixture of 0.2 part of sodium pyrosulfite and 5 parts of water, and a mixture of 5 parts of methyl methacrylae, 10 parts of t-butyl methacrylate and 0.5 part of glycidyl methacrylate were introduced into the reaction vessel over the course of about 1.5 hours and reacted, and the reaction mixture was aged for 1 hour. A mixture of 30 parts of styrene, 52 parts of p-methylstyrene, 2 parts of acrylic acid and 1 part of divinylbenzene, a mixture of 0.2 part of ammonium persulfate and 5 parts of water, and a mixture of 0.2 part of sodium pyrosulfite and 5 parts of water were each introduced into the resulting seed emulsion particles over the course of 2 hours, and reacted at 80 $^{O}$C. The reaction mixture was aged for 45 minutes, cooled, and adjusted to pH 8.3 by adding 0.1 part of 25% aqueous ammonia.

The resulting emulsion had a solids concentration of 47 %, a viscosity (measured at 25 $^{O}$C by a BM-type rotating viscometer with rotor No. 1 at a rotating speed of 60 rpm) of 18 cps, a pH of 8.3, an average particle diameter measured by an electron microscope of 0.3 micrometer, and a microvoid diameter of 0.05 to 0.15 micrometer. The resulting emulsion is designated as A-2.

## EXAMPLE 3

The same reaction vessel as in Example 1 was charged with 100 parts of water and 7 parts of an emulsifier (composed of 5.0 parts of Emulgen 120 and 2 parts of Hitenol N-08), and the inside of the reaction vessel was maintained at 70 $^{\circ}$C. A mixture of 0.2 part of ammonium persulfate and 5 parts of water, a mixture of 0.2 part of sodium pyrosulfite and 5 parts of water, and a mixture of 20 parts of methyl methacrylate, 20 parts of acrylonitrile, 1 part of acrylic acid and 5 parts of ethylene glycol dimethacrylate were introduced into the reaction vessel over the course of about 1 hour, and reacted, and the reaction mixture was aged for 1 hour. To the resulting product was injected over the course of 2 hours each of a mixture of 30 parts of styrene, 22 parts of p-methylstyrene and 2 parts of divinylbenzene, a mixture of 0.2 part of ammonium persulfate and 5 parts of water, and a mixture of 0.2 part of sodium pyrosulfite and 5 parts of water, and they were reacted at 70 $^{\circ}$C. The reaction mixture was aged for 1 hour. It was then cooled, and adjusted in pH by adding 25% aqueous ammonia to form a resin emulsion. The resulting emulsion is designated as A-3, and its properties are shown in Table 1.

## EXAMPLE 4

The same reaction vessel as in Example 1 was charged with 100 parts of water and 7 parts of an emulsifier (composed of 5 parts of Emulgen 120 and 2 parts of Hitenol N-08), and the inside of the reaction vessel was maintained at 80 $^{\circ}$C. Potassium persulfate (0.2 part), 10 parts of t-butyl acrylate, 20 parts of styrene, 20 parts of methyl methacrylate and 3 parts of ethylene glycol dimethacrylate were introduced into the reaction vessel over the course of about 2 hours and reacted. The reaction mixture was then aged for 1 hour. To the resulting emulsion were added 0.2 part of potassium persulfate and a mixture of 35 parts of styrene, 10 parts of n-butyl

- 13 -

acrylate and 2 parts of ethylene glycol dimethacrylate, and they were reacted at 80 °C. The reaction mixture was aged for 1 hour, cooled, and adjusted in pH to obtain a resin emulsion. The resulting emulsion is designated as A-4, and its properties are shown in Table 1.

EXAMPLE 5

The same reaction vessel as used in Example 1 was charged with 100 parts of water and 6.5 parts of an emulsifier (composed of 5 parts of Emulgen 120 and 1.5 parts of Hitenol N-08), and the inside of the temperature was maintained at 50 °C. A mixture of 0.2 part of ammonium persulfate and 5 parts of water, a mixture of 0.2 part of sodium pyrosulfite and 5 parts of water, and a mixture of 20 parts of methyl methacrylate, 10 parts of ethyl methacrylate and 0.5 part of gamma-methacryloxypropyltrimethoxysilane were introduced into the reaction vessel over the course of 2 hours and reacted. The reaction mixture was aged, and to the resulting emulsion were each added over the course of 2 hours a mixture of 30 parts of styrene, 25 parts of alpha-methylstyrene, 12 parts of n-butyl acrylate, 2 parts of acrylic acid and 0.5 part of divinylbenzene, a mixture of 0.2 part of ammonium persulfate and 5 parts of water and a mixture of 0.2 part of sodium pyrosulfite and 5 parts of water, and they were reacted at 50 °C. The reaction mixture was aged for 1 hour, cooled, and adjusted in pH to obtain a resin emulsion. The resulting emulsion is designated as A-5, and its properites are shown in Table 1.

EXAMPLES 6-10

Resin emulsions A-6 to A-10 were respectively prepared in the same way as in Examples 1 to 5 except that in the second-stage polymerization for obtaining the emulsions A-1 to A-5, 0.2 part of an emulsifier (Levenol WZ made by Kao Soap, Co., Ltd.) was put in the aqueous phase. The properties of the resulting emulsions are shown in Table 1.

COMPARATIVE EXAMPLE 1

- 14 -

A reactor equipped with a stirrer, a reflux condenser, a dropping funnel and a thermometer was charged with 100 parts of water and 5 parts of the same emulsifier as used in Example 1, and they were well stirred. Then, the reaction vessel was heated, and its inside was maintained at 80 °C. A mixture of 20 parts of acrylonitrile, 10 parts of n-butyl acrylate, 52 parts of styrene, 10 parts of alpha-methylstyrene, 2 parts of methacrylic acid, 5 parts of ethylene glycol dimethacrylate and 1 part of divinylbenzene and a mixture of 0.5 part of ammonium persulfate and 5 parts of water were introduced into the reaction vessel over the course of about 2 hours. The reaction mixture was aged for 1 hour, then cooled, and adjusted in pH to obtain a resin emulsion (A'-1). The properties of this emulsion are shown in Table 1.

COMPARATIVE EXAMPLE 2

A copolymer emulsion (I) obtained by the same method as in the first half of Example 1 from 20 parts of acrylonitrile, 10 parts of n-butyl acrylate and 5 parts of ethylene glycol dimethacrylate as monomers was blended with a copolymer emulsion (II) obtained by polymerizing 52 parts of styrene, 10 parts of alpha-methylstyrene, 2 part of methacrylic acid and 1 part of divinylbenzene by using the same amount of the same emulsilfier as used in the preparation of the emulsion (I) so that the weight ratio of the solids content of (I) to (II) was 21:79. Thus, a resin emulsion (A'-2) was obtained.

COMPARATIVE EXAMPLES 3-6

The same emulsifiers and monomers as used in Examples 2, 3, 4 and 5 were charged at a time and homogeneously copolymerized for about 4 hours. The products were each cooled to obtain resin emulsions (A'-3) to (A'-6). The emulsion A'-3 corresponds to Example 2; A'-4, to Example 3; A'-5, to Example 4; and A'-5, to Example 5. The properties of these emulsions are shown in Table 1.

## Table 1

| Run | | Resin emul- sion No. | Resin emulsion | | | | |
|---|---|---|---|---|---|---|---|
| | | | 1st stage reaction | | 2nd stage reaction | | |
| | | | Monomer composition | $\delta_1$ | Monomer composition | $\delta_2$ | $\lvert\delta_1-\delta_2\rvert$ |
| Example | 1 | A- 1 | AN /n-BA /EGDM (20)/ (10)/ (5) | 9.7 | St /α-MSt /MAA /DVB (52)/ (10) / (2)/ (1) | 9.3 | 0.4 |
| | 2 | A- 2 | t-BMA /MMA /GMA (10) / (5) /(0.5) | 9.0 | St /p-MSt /AA /DVB (30)/ (52) / (2)/(0.5) | 9.4 | 0.4 |
| | 3 | A- 3 | MMA /AN /AA /EGDM (20)/(20)/(1)/ (5) | 9.6 | St /p-MSt /DVB (30)/ (22) / (2) | 9.3 | 0.3 |
| | 4 | A- 4 | t-BA /MMA /St /EGDM (10)/(20)/(20)/ (3) | 9.0 | St /n-BA /EGDM (35)/ (10)/ (2) | 9.2 | 0.2 |
| | 5 | A- 5 | MMA /EMA /KBM-503 (20)/(20)/ (0.5) | 8.6 | St /α-MSt /n-BM /AA /DVB (30)/ (25) / (12)/(2)/(0.5) | 9.3 | 0.7 |
| | 6 | A- 6 | Same as A-1 | 9.7 | Same as A-1 | 9.3 | 0.4 |
| | 7 | A- 7 | Same as A-2 | 9.0 | Same as A-2 | 9.4 | 0.4 |
| | 8 | A- 8 | Same as A-3 | 9.6 | Same as A-3 | 9.3 | 0.3 |
| | 9 | A- 9 | Same as A-4 | 9.0 | Same as A-4 | 9.2 | 0.2 |
| | 10 | A-10 | Same as A-5 | 8.6 | Same as A-5 | 9.3 | 0.7 |

- to be continued -

0173789

Table 1 (continued)

| Run | | Tg (°C) | Particle diameter (μm) | Microvoid diameter (μm) | Viscosity (cps) | pH | Solids concentration (%) |
|---|---|---|---|---|---|---|---|
| | | | | Resin emulsion | | | |
| Example | 1 | 77 | 0.4 | 0.1–0.2 | 15 | 8.6 | 48 |
| | 2 | 102 | 0.3 | 0.05–0.15 | 18 | 8.3 | 47 |
| | 3 | 100 | 0.3 | 0.05–0.15 | 23 | 8.8 | 46 |
| | 4 | 72 | 0.4 | 0.05–0.15 | 19 | 8.4 | 51 |
| | 5 | 70 | 0.4 | 0.1–0.2 | 35 | 8.6 | 46 |
| | 6 | 77 | 0.4 | 0.1–0.2 | 31 | 8.7 | 48 |
| | 7 | 102 | 0.3 | 0.05–0.15 | 37 | 8.4 | 47 |
| | 8 | 100 | 0.3 | 0.05–0.15 | 42 | 8.3 | 46 |
| | 9 | 72 | 0.3 | 0.05–0.15 | 36 | 8.8 | 51 |
| | 10 | 70 | 0.4 | 0.1–0.2 | 53 | 8.2 | 46 |

0173789

Table 1 (continued)

| Run | | Resin emul- sion No. | Resin emulsion | | | | |
|---|---|---|---|---|---|---|---|
| | | | 1st stage reaction | | 2nd stage reaction | | |
| | | | Monomer composition | $\delta_1$ | Monomer composition | 2 | $\|\delta_1-\delta_2\|$ |
| Comparative Example | 1 | A'-1 | AN /n-BA /St /$\alpha$-MSt /MAA /EGDM /DVB (20)/ (10)/ (52)/ (10)/ (2) / (5) / (1) | | | | |
| | 2 | A'-2 | Blend of the emulsion obtained by the 1st stage reaction of A-1 with the emulsion obtained by the 2nd stage reaction of A-1 | | | | |
| | 3 | A'-3 | t-BMA /MMA /St /p-MSt /AA /DVB /GMA (10) / (5)/ (30)/ (52) / (2)/ (0.5)/ (0.5) | | | | |
| | 4 | A'-4 | MMA /AN /St /p-MSt /AA /DVB /EGDM (20)/ (20)/ (30)/ (22) / (1)/ (2)/ (5) | | | | |
| | 5 | A'-5 | t-BA /MMA /St /n-BA /EGDM (10)/ (20)/ (55)/ (10)/ (5) | | | | |
| | 6 | A'-6 | MMA /EMA /St /$\alpha$-MSt /n-BA /AA /KBM-503 /DVB (20)/ (10)/ (30)/ (25)/ (12)/ (2)/ (0.5) / (0.5) | | | | |

- 17 -

0173789

Table 1 (continued)

| Run | | Resin emulsion | | | | | |
|---|---|---|---|---|---|---|---|
| | | Tg (°C) | Particle diameter (μm) | Microvoid diameter (μm) | Viscosity (cps) | pH | Solids concentration (%) |
| Comparative Examples | 1 | 77 | 0.05 | – | 950 | 8.7 | 48 |
| | 2 | 77 | 0.05 | – | 830 | 8.1 | 48 |
| | 3 | 102 | 0.05 | – | 1250 | 8.8 | 47 |
| | 4 | 100 | 0.05 | – | 1330 | 8.5 | 46 |
| | 5 | 72 | 0.05 | – | 1480 | 8.6 | 48 |
| | 6 | 70 | 0.05 | – | 1370 | 8.2 | 47 |

Note to Table 1

1)    Monomer composition

The following abbreviations are used.

AN: acrylonitrile

n-BA: n-butyl acrylate

St: styrene

MAA: methacrylic cid

t-BMA: t-butyl methacrylate

GMA: glycidyl methacrylate

EGDM: ethylene glycol dimethacrylate

p-MSt: p-methylstyrene

EMA: ethyl methacrylate

α-MSt: α-methylstyrene

KBM-503: γ-methacryloxypropyltrimethoxysilane (a product of Shinetsu Chemical Co., Ltd.)

DVB: divinylbenzene

2)    $\delta_1$: the solubilty parameter of the monomeric mixture used in the first-stage polymerization

3)    $\delta_2$: the solubility parameter of the monomeric mixture used in the second-stage polymerization

4)    $|\delta_1 - \delta_2|$ : the difference between the solubility parameters of the monomeric mixtures used in the first and second stage polymerizations

5)    Tg: the glass transiton temperature (calculated) of the entire monomeric composition

COMPARATIVE EXAMPLE 7

First-stage reaction:-

The same reaction vessel as used in Example 1 was charged with 2900 parts of water and 2.0 parts of sodium dodecylbenzenesulfonate, and they were well stirred. The reaction vessel was then heated to maintain its inside at 80 °C. A portion (50 parts) of a monomeric emulsion prepared from 266 parts of water, 0.40 parts of sodium dodecylbenzenesulfonate, 416 parts of butyl methacrylate, 374 parts of methyl methacrylate and 10.4 parts of methacrylic acid was added to the reaction vessel, and then a solution of 3 parts of ammonium persulfate in 10 ml of water was added. Fifteen minutes later, the remainder of the monomer emulsion was added dropwise at a rate of 16 parts/min. The reaction temperature was raised to 85 $^{\circ}$C, and the monomers were reacted. In 15 minutes after the end of adding the monomers, the reaction mixture was cooled. Then, a 25% aqueous solution of ammonia was added to adjust its pH to 9.4.

The resulting emulsion had a solids concentration of 19.5 % and an average particle diameter of 0.095 micrometer.

Second-stage reaction:-

The same reaction vessel as used in the first-stage reaction was charged with 2115 parts of water and a solution of 4.2 parts of ammonium persulfate in 25 parts of water, and subsequently, 62 parts of the seed emulsion particles obtained in the first-stage reaction was added. An emulsion composed of 235 parts of water, 0.8 parts of sodium dodecylbenzenesulfonate, 490 parts of methyl methacrylate, 210 parts of methacrylic acid and 3.5 parts of ethylene glycol diacrylate was introduced into the reaction vessel over the course of 3 hours at 85 $^{\circ}$C and reacted. The reaction mixture was aged for 30 minutes, then cooled and filtered to form an emulsion having a pH of 2.3, a solids concentration of 22.4 % and an average particle diameter of 0.35 microns. The emulsion was diluted (with water) and neutralized to a pH of 10 with 25% aqueous ammonia. Observation under an electron microscope showed that the resulting emulsion had an average particle diameter of 0.8 micron which corresponded to swelling to about 12 times in volume.

Third-stage reaction:-

Water (80 parts) was heated to 85 $^{\circ}$C in the same reaction vessel as in the first-stage reaction, and 0.07 part of ammonium persulfate was added to it. Then, 4.5 parts of the polymer dispersion in the second-stage reaction (containing 1 part of solid polymer) was added. A mixture of 12 parts of methyl methacrylate, 6 parts of isobutyl methacrylate and 0.2 part of methacrylic acid was added over the course of 1 hour while maintaining its temperature at 85 °C. The temperature was maintained at 85 °C until at least 98 % of the monomers reacted. The reaction mixture was cooled, and neutralized with 25 % aqueous ammonia. The neutralized dispersion was heated at 95 °C for 1 hour, and then cooled to room temperature. Examination by an electron microscope showed that the dispersed particles were swollen to an average diameter of 1.15 microns. The average diameter of the microvoids was 0.8 micron. The resulting emulsion is designated as A'-7.

### APPLICATION EXAMPLE 1

16.1 Parts of each of the emulsions A-1, A-6, A'-1, A'-2 and A'-7 prepared in Examples 1 and 6 and Comparative Examples 1, 2 and 7 respectively, 60.1 parts of a film-forming acrylic/styrene copolymer resin emulsion (VONCOAT EC-880 manufactured by Dainippon Ink and Chemicals, Inc.) and a 71% aqueous dispersion of rutile titanium dioxide in each of the amounts indicated in Table 2 were mixed. To the mixture was slowly added 1.4 parts of tributyl phosphate, 16.5 parts of water and 0.18 part of hydroxyethyl cellulose, and the mixture was stirred until its viscosity became constant.

The paints so obtained were coated on a morest hiding power chart to form coated films of the same thickness, and air-dried for 3 days. The physical and chemical properties of these coated films are shown in Table 2.

Table 2

| Paint No. | | (I) | (i) | (ii) | (II) | (III) | (iii) | (iv) | (v) | (vi) |
|---|---|---|---|---|---|---|---|---|---|---|
| Non-film forming resin emulsion | | A-1 | – | A'-1 | A-1 | A-6 | A'-1 | A'-2 | – | A'-7 |
| Film-forming resin emulsion | | Voncoat EC-880 | | | | | | | | |
| Amount of rutile titanium oxide (parts) | | – | – | – | 16.6 | 16.6 | 16.6 | 16.6 | 16.6 | 16.6 |
| Non-film forming resin emulsion | Average particle diameter (µm)(1) | 0.4 | – | 0.05 | 0.4 | 0.4 | 0.05 | 0.05 | – | 1.15 |
| | Mechanical stability (2) | ○ | – | X | ○ | ○ | △ | △ | – | ○ |
| | Solubility of polymer (3) — Acetone | ○ | – | ○ | ○ | ○ | ○ | ○ | – | △ |
| | Methanol | ○ | – | ○ | ○ | ○ | ○ | ○ | – | △ |
| | Toluene | ○ | – | ○ | ○ | ○ | ○ | ○ | – | ○ |
| | Benzene | ○ | – | ○ | ○ | ○ | ○ | ○ | – | ○ |
| Paint composition | Solids concentration (%) | 43.0 | 28.6 | 43.0 | 46.1 | 46.1 | 46.1 | 46.1 | 46.1 | 46.1 |
| | PVC (vol.%) | 40.0 | – | 40.0 | 27.3 | 27.3 | 27.3 | 27.3 | 9.7 | 27.3 |
| | PWC (%) | 39.0 | – | 39.0 | 39.3 | 39.3 | 39.3 | 39.3 | 28.2 | 39.4 |

- to be continued -

- 22 -

017378

Table 2 (continued)

| Paint No. | | (I) | (i) | (ii) | (II) | (iii) | (III) | (iv) | (v) | (vi) |
|---|---|---|---|---|---|---|---|---|---|---|
| Properties of the coated film | Light transmittance (%) (4) | 5.8 | 93 | 73 | – | – | – | – | – | – |
| | Gloss (glass plate) (5) | 84 | 89 | 81 | 89 | 90 | 82 | 69 | 90 | 86 |
| | Gloss (hiding power test paper) (6) | 80 | 87 | 82 | 87 | 88 | 76 | 64 | 88 | 84 |
| | Hiding power ratio (7) | 0.62 | 0.01 | 0.05 | 0.98 | 0.97 | 0.90 | 0.91 | 0.86 | 0.98 |
| | Water resistance (8) | O | O | O | O | O | Δ | Δ | O | X |
| | Gloss retention after water resistance test (%) (9) | 94 | 72 | 83 | 97 | 97 | 83 | 71 | 91 | 63 |
| | Alkali resistance (10) | O | O | O | O | O | O | O | O | X |
| | Gloss retention after alkali resistance test (%) (11) | 93 | 75 | 82 | 97 | 97 | 84 | 77 | 90 | 54 |
| | Washing resistance (12) | O | O | Δ | O | O | Δ | Δ | O | X |
| | Weatherability (13) | O | O | Δ | O | O | Δ | Δ | O | X |
| | Accelerated weather-ability (14) | O | O | Δ | O | O | Δ | Δ | O | X |

Note: Paints Nos. (I), (II) and (III) were prepard by using the non-film forming resin emulsions of the invention. Other paints are for comparison.

Testing methods were as follows:-

1) Particle diameter

Measured by taking a microphotograph of the emulsion sample through a transmission-type electron microscope.

2) Mechanical stability

Fifty grams of the emulsion sample was treated for 10 minutes under a load of 10 kg and at a speed of 3,000 rpm by a Moron tester, and then the amount of the agglomerated product was measured. The proportion of the agglomerated product formed was calculated in accordance with the following equation.

$$(A) = \frac{(B)}{50 \times NV/100} \times 100$$

(A): the proportion (%) of the agglomerated product formed

(B): the amount (g) of the agglomerated product formed

The mechnical stability was evaluated on the following standard.

○ : (A) is less than 0.1 %

△ : (A) is at least 0.5 %

3) Solubility of the polymer

Water was evaporated from the emulsion, and the resulting resin powder was added to a solvent in a concentration of 5 % and observed.

The solubility was evaluated on the following standard.

○ : insoluble

X : soluble

4) Light transmittance of the coated film

The prepared paint sample was left to stand for one day, and then coated on a glass plate by a 3-mil applicator, and dried at 23 °C and 65 % RH for 1 day. Then, the light transmittance of the coated film was measured by a Murakami-type gloss meter (90°/0°).

5)      Gloss (on a glass plate)

The prepared paint sample was left to stand for one day, and then coated on a glass plate by a 3-mil applicator, and dried at 23 °C and 65 % RH for 1 day. Then, the gloss of the coated film was measured by a Murakami-type gloss meter.

6)      Gloss (on a hiding power test paper)

The prepared paint sample was left to stand for one day, and then coated on a hiding power test paper by a 6-mil applicator, and dried at 23 °C and 65 % RH for 5 days. Then, the gloss of the coated film was measured by a Murakami-type gloss meter.

7)      Hiding power ratio

The gloss (45°/0°) of the coted film prepared in 6) was measured with respect to the black and white portions of a hiding power test paper (made by Japan Test Panel Kogyo Co., Ltd.). The hiding power ratio was calculated in accordance with the following equation (JIS K-5400) from the diffusion reflectances obtained.

$$\text{Hiding power ratio} = \frac{45°/0° \text{ diffusion reflectance of the film on a black background}}{45°/0° \text{ diffusion reflectance of the film on a white background}}$$

8)      Water resistance

The coated film on the glass plate prepared in 4) was dried for 1 day and immersed in water at room temperature for 14 days. The water resistance of the coated film was then visually evaluated on the following standard.

⃝ : No swelling with some blistering

△ : Swelling with some blistering

X : Great swelling and much blistering

9)      Gloss retention after the water resistance test

After the test 8), the gloss of the coated film was measured by a Murakami-type gloss meter. The percentage of the resulting gloss based on the gloss determined in 5) was calculated and defined as the gloss retention.

10)      Alkali resistance

The coated film on the glass plate prepared in 5) above was dried for 1 day, and then immersed for 14 days in an aqueous solution containing 2% NaOH and saturated $Ca(OH)_2$. Then, the condition of the coated film was evaluated visually on the following standard.

○ : Swelling with no blistering

X :  Swelling and blistering both occurred

11)      Gloss retention after the alkali resistance test

The coated film after the alkali resistance test in 10) was dried at room temperature for 2 days and its gloss ($60°/60°$) was measured. The percentage of the determined gloss based on the gloss determined in 5) was calculated, and defined as the gloss retention.

12)      Washing resistance

The paint sample was coated on a delustered vinyl chloride resin sheet by a 6-mil applicator, and dried for 7 days. The washing resistance of the coated film was then measured by a Gardner washing resistance tester, and evaluated on the following standard.

○ : The coated film was not peeled after 2000 cycles

△ : The coated film was peeled after 1000 to 200 cycles

X : The coated film was peeled after less than 1000 cycles

13)      Weatherability

The paint sample was brush-coated twice on a slate board, and dried for 7 days. The coated board was exposed outdoors for 6 months, and then the condition of the coated film was visually evaluated on the following standard.

○ : Good

△ : Fair

X : Poor

14)    Accelerated weatherability

The coated slate board prepared in 13) was dried for 7 days, and then exposed to Weather-0-Meter for 500 hours.

The accelerated weatherabilty of the coated film was evaluated on the following standard.

○ : Good

△ : Fair

X : Poor

APPLICATION EXAMPLE 2

To 16.1 parts of each of the emulsions A-2 to A-5, A-7 to A-10 and A'-3 to A'-6 obtained in the foregoing Examples and Comparative Examples were added 60 parts of an aqueous acrylic/styrene copolymer resin emulsion (VONCOAT 5460 manufactured by Dainippon Ink and Chemicals, Inc.) and 16.58 parts of a 71% aqueous dispersion of rutile titanium dioxide. Tributyl phosphate (1.4 parts), 16.5 parts of water and 0.18 part of hydroxyethyl cellulose were added slowly, and the mixture was stirred until its viscosity became constant.

The resulting various paints were coated in a given arrangement on a morest hiding power charet and a glass plate to form coated films of the same thickness and then dried in the air for 3 days. The properties of the paints and the coated films are shown in Table 3. The paints had a solids concentraion of 46.1 %, a PVC of 27.3 % by volume and a PWC of 39.4 %.

Table 3

| | Paint No. | | (IV) | (V) | (vii) | (VI) | (VII) | (viii) | (VIII) |
|---|---|---|---|---|---|---|---|---|---|
| Non-film forming resin emulsion | Type | | A-2 | A-7 | A'-3 | A-3 | A-8 | A'-4 | A-4 |
| | Average particle diameter (μm) | | 0.3 | 0.3 | 0.05 | 0.3 | 0.3 | 0.05 | 0.4 |
| | Mechanical stability | | O | O | X | O | O | X | O |
| | Solubility of polymer | Acetone | O | O | O | O | O | O | O |
| | | Methanol | O | O | O | O | O | O | O |
| | | Toluene | O | O | O | O | O | O | O |
| | | Benzene | O | O | O | O | O | O | O |
| Properties of the coated film | Gloss (glass plate) | | 89 | 88 | 80 | 89 | 90 | 81 | 88 |
| | Hiding power ratio | | 0.98 | 0.97 | 0.91 | 0.98 | 0.98 | 0.92 | 0.97 |
| | Gloss (hiding power test paper) | | 86 | 86 | 76 | 86 | 88 | 77 | 85 |
| | Water resistance | | O | O | Δ | O | O | Δ | O |
| | Gloss retention after water resistance test (%) | | 96 | 97 | 72 | 95 | 96 | 73 | 96 |
| | Alkali resistance | | O | O | O | O | O | O | O |
| | Gloss retention after alkali resistance test (%) | | 95 | 96 | 79 | 96 | 95 | 80 | 95 |
| | Washing resistance | | O | O | Δ | O | O | Δ | O |
| | Weatherability | | O | O | Δ | O | O | Δ | O |
| | Accelerated weatherability | | O | O | Δ | O | O | Δ | O |

Table 3 (continued)

| Paint No. | | | (IX) | (ix) | (X) | (XI) | (x) | (xi) |
|---|---|---|---|---|---|---|---|---|
| Non-film forming resin emulsion | Type | | A-9 | A'-5 | A-5 | A-10 | A'-6 | A'-7 |
| | Average particle diameter (μm) | | 0.3 | 0.05 | 0.4 | 0.4 | 0.05 | 1.15 |
| | Mechanical stability | | ○ | X | ○ | ○ | X | ○ |
| | Solubility of polymer | Acetone | ○ | ○ | ○ | ○ | ○ | Δ |
| | | Methanol | ○ | ○ | ○ | ○ | ○ | Δ |
| | | Toluene | ○ | ○ | ○ | ○ | ○ | ○ |
| | | Benzene | ○ | ○ | ○ | ○ | ○ | ○ |
| Properties of the coated film | Gloss (glass plate) | | 89 | 78 | 86 | 87 | 76 | 88 |
| | Hiding power ratio | | 0.96 | 0.89 | 0.97 | 0.98 | 0.90 | 0.98 |
| | Gloss (hiding power test paper) | | 85 | 73 | 84 | 84 | 71 | 85 |
| | Water resistance | | ○ | Δ | ○ | ○ | Δ | X |
| | Gloss retention after water resistance test (%) | | 97 | 72 | 96 | 97 | 73 | 63 |
| | Alkali resistance | | ○ | ○ | ○ | ○ | ○ | X |
| | Gloss retention after alkali resistance test (%) | | 96 | 78 | 96 | 96 | 80 | 45 |
| | Washing resistance | | ○ | Δ | ○ | ○ | Δ | X |
| | Weatherability | | ○ | Δ | ○ | ○ | Δ | X |
| | Accelerated weatherability | | ○ | Δ | ○ | ○ | Δ | X |

0173789

- 30 -

Note: The properties of the coated film were tested as indicated in Table 2.

Paints Nos. (IV) to (XI) were prepared by using the non-film forming resin emulsions of the inventions, and the other paints are for comparison.


APPLICATION EXAMPLE 3

Six parts of an aqueous acrylic/styrene resin emulsion (VONCOAT 5460 made by Dainippon Ink and Chemicals, Inc.), 1.4 parts of tributyl phosphate, 16.5 parts of water and 0.18 part of hydroxyethyl cellulose were slowly added to 40 parts of the emulsion A-1 obtained in Example 1 and commercial resin emulsions, i.e. Ropaque-OP-42 (acrylic/styrene copolymer resin emulsion, solids content 40.8 %; a product of Rohm & Haas Co.), Spindrift (polyester resin emulsion, solids content 29.6 %; a product of Encapsulair Inc.), Lytoron 2202 (styrene resin emulsion, solids content 47.1 %; a product of Monsanto Company), and Plastic Pigment 722 (styrene resin emulsion, solids content 49.3 %; a product of Dow Chemical Co.). The mixture was stirred until its viscosity became constant.

The various paints so obtained were coated on a morest hiding power chart and a glass plate to form coated films having the same thickness and dried in the air for 3 days. The properties of these emulsions and the coated films are summarized in Table 4.

The paints all had a solids content of 43.0 %, a PVC of 40.0 and a PWC of 39.0 %.

Table 4

| Paint No. | | (XII) | (xii) | (xiii) | (xiv) | (xv) |
|---|---|---|---|---|---|---|
| Type of the resin emulsion | | A-1 | Y-1 | Y-2 | Y-3 | Y-4 |
| Properties of the resin emulsion | Average particle diameter (µm) | 0.4 | 0.5-0.6 | 9-12 | 0.2 | 0.35-0.55 |
| | Mechanical stability | O | O | O | O | O |
| | Solubility of polymer — Acetone | O | Δ | O | O | O |
| | Methanol | O | O | O | O | O |
| | Toluene | O | X | Δ | X | Δ |
| | Benzene | O | X | Δ | X | Δ |
| Properties of the coated film | Light transmittance (%) | 4.3 | 1.6 | 0.5 | 75 | 56 |
| | Gloss (glass plate) | 81 | 67 | 10 | 85 | 83 |
| | Gloss (hiding power test paper) | 76 | 62 | 9 | 80 | 83 |
| | Hiding power ratio | 0.67 | 0.59 | 0.88 | 0.15 | 0.13 |
| | Water resistance | O | O | O | O | O |
| | Gloss retention after water resistance test (%) | 92 | 92 | 80 | 94 | 93 |
| | Alkali resistance | O | O | O | O | O |
| | Gloss retention after alkali resistance test (%) | 92 | 91 | 65 | 93 | 94 |
| | Washing resistance | O | O | O | O | O |
| | Weatherability | O | O | O | O | O |
| | Accelerated weatherability | O | O | O | O | O |

0173789

- 32 -

Note: Y-1:Ropaque-OP-42, Y-2:Spindrift, Y-3:Lytoren 2202, Y-4:Plastle Pigment 722 The properties of the emulsions and the coated films were tested as indicated in Table 1.

Paint No. (XII) was prepared by using the non-film forming resin emulsion of the invention, and the other paints are for comparison.

EXAMPLES 11-16

Each of the emulsions A-1, A-2, A-3, A-4, A-5 and A-6 prepared in Examples 1 to 6 (5.6 liters) was treated for 3 hours in a spray drying machine (made by Ashizawa Nitroatomizer Co., Ltd.; mobile minor type for small-scale research and development) at a flow inlet temperature of 140 to 180 $^{\circ}$C and a dropping rate of 2.0 liters/hour to form a resin powder. The properties of the resulting resin powders are shown in Table 5.

Table 5

| Properties of the resin powder | | | Example | | | | | |
|---|---|---|---|---|---|---|---|---|
| | | | 11 | 12 | 13 | 14 | 15 | 16 |
| Type of the emulsion | | | A-1 | A-2 | A-3 | A-4 | A-5 | A-6 |
| | Appearance | | White fine powder | | | | | |
| | Shape | | Completely spherical | | | | | |
| | Particle diameter (1) (μm) | | 10-20 | | | | | |
| | Microvoid diameter ( m) | | 0.1-0.2 | 0.05-0.15 | 0.05-0.15 | 0.05-0.15 | 0.1-0.2 | 0.1-0.2 |
| | Specific gravity | | 1.02 | | | | | |
| | Tg (oC) | | 77 | 102 | 100 | 72 | 70 | 77 |
| | Heat decomposition temperature (2) (oC) | | 330 | 367 | 370 | 325 | 320 | 330 |
| | Solubility of polymer (3) | Butyl acetate | Insoluble (85.5) | Insoluble (62.3) | Insoluble (88.2) | Insoluble (78.5) | Insoluble (61.2) | Insoluble (85.5) |
| | | Toluene | " (87.3) | " (65.2) | " (89.3) | " (80.3) | " (64.5) | " (87.2) |
| | | n-Butanol | " (86.0) | " (64.1) | " (88.2) | " (79.2) | " (62.3) | " (85.8) |
| | | Methyl isobutyl ketone | " (89.0) | " (68.2) | " (90.5) | " (83.2) | " (63.8) | " (88.6) |
| | | Xylene | " (90.1) | " (69.3) | " (91.8) | " (84.1) | " (66.5) | " (87.8) |

Note to Table 5

The parenthesized figures in the rows of polymer solubility show gel fractions (%).

1): The particle diameter was measured on the basis of a microphotograph of the fine powder taken through a scanning electron microscope.

2): The heat decompositon temperature was determined by differential thermal analysis in $N_2$.

3): Polymer solubility

One gram of the fine powder was washed with 3 10 ml portions of each of the solvents (centrifugation about 1 hour). From the amount (g) of the remaining powder, the polymer gel fraction (%) was calculated in accordance with the following equation.

$$\text{Gel fraction (\%)} = \frac{\text{the weight of the remaining powder}}{\text{the emulsion powder}} \times 100$$

APPLICATION EXAMPLE 4

Each of the resin powders obtained in Examples 11 to 16 (7.7 parts), 60.1 parts of an acrylic/styrene resin emulsion (VONCOAT EDT-880, a product of Dainippon Ink and Chemicals, Inc.) and 16.6 parts of a 71% aqueous dispersion of rutile titanium dioxide were mixed, and 1.4 parts of tributyl phosphate, 24.9 parts of water and 0.18 part of hydroxyethyl cellulose were slowly added. The mixture was stirred until its viscosity became constant.

The resulting paints were coated in a given arrangement on a morest hiding power chart to form coated films having the same thickness, and then dried in air for 3 days. The physical and chemical properties of the coated films are shown in Table 6.

Table 6

| Paint No. | | | (XIII) | (XIV) | (XV) | (XVI) | (XVII) | (XVIII) | (iii) | (iv) |
|---|---|---|---|---|---|---|---|---|---|---|
| Non-film forming resin emulsion powder of Example | | | 11 | 12 | 13 | 14 | 15 | 16 | – | – |
| Non-film forming emulsion resin powder | Solubility of polymer | Acetone | ○ | ○ | ○ | △ | △ | ○ | | |
| | | Methanol | ○ | ○ | ○ | ○ | ○ | ○ | | |
| | | Toluene | ○ | ○ | ○ | ○ | ○ | ○ | | |
| | | Benzene | ○ | ○ | ○ | ○ | ○ | ○ | | |
| Paint composition | Solids concentration (%) | | 46.1 | | | | | | | |
| | PVC (vol.%) | | 27.3 | | | | | | | |
| | PWC (%) | | 39.3 | | | | | | | |
| Properties of the coated film | Gloss (glass plate) | | 90 | 89 | 88 | 87 | 85 | 89 | 82 | 69 |
| | Gloss (hiding power test paper) | | 88 | 85 | 86 | 84 | 82 | 87 | 76 | 64 |
| | Hiding power ratio | | 0.98 | 0.99 | 0.99 | 0.98 | 0.98 | 0.99 | 0.90 | 0.91 |
| | Water resistance | | ○ | ○ | ○ | ○ | ○ | ○ | △ | △ |
| | Gloss retention after water resistance test (%) | | 98 | 98 | 97 | 98 | 98 | 98 | 83 | 71 |
| | Alkali resistance | | ○ | ○ | ○ | ○ | ○ | ○ | ○ | ○ |
| | Gloss retention after alkali resistance test (%) | | 98 | 97 | 96 | 97 | 98 | 98 | 84 | 77 |
| | Washing resistance | | ○ | ○ | ○ | ○ | ○ | ○ | △ | △ |
| | Weatherability | | ○ | ○ | ○ | ○ | ○ | ○ | △ | △ |
| | Accelerated weatherability | | ○ | ○ | ○ | ○ | ○ | ○ | △ | △ |

Note:  The properties of the coated film were tested as indicated in Table 2.

Paints Nos. (iii) and (iv) were prepared in Application Example 1, and are shown herein for comparison.

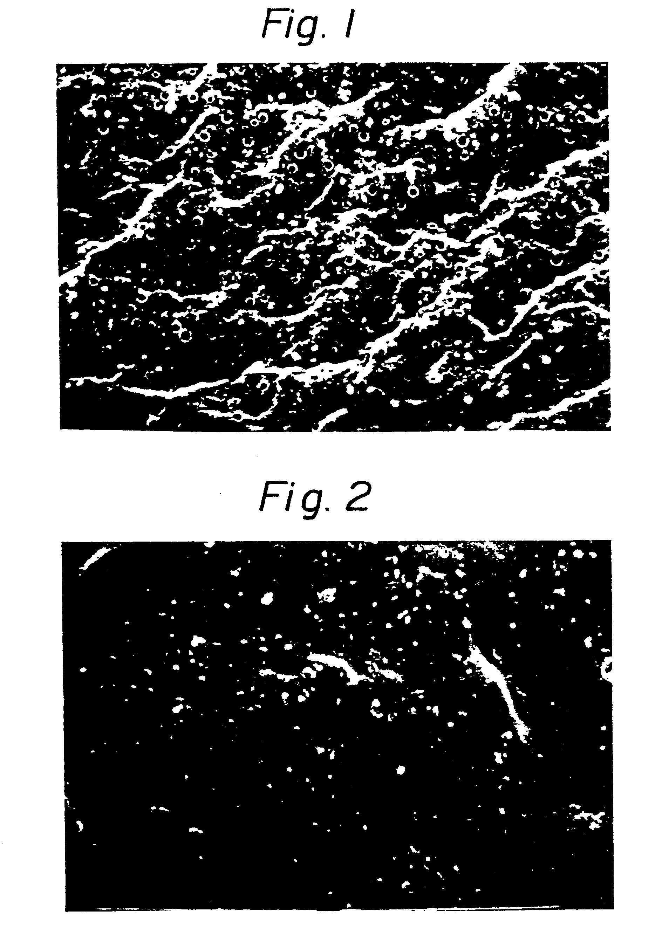

Each of paint No. (II) (prepared by using the non-film forming resin emulsion A-1), the paint No. (iii) (prepared by using the resin emulsion A'-1), and paint No. (v) (prepared by using only VONCOAT EC-880 alone) of Application Example 1 and paint No. (XIII) of Application Example 4 (prepared by using the non-film forming resin emulsion A-1) was coated on a glass plate, maintained at room temperature for 1 week, then dried at 50 $^{\circ}$C for 24 hours, frozen in liquid nitrogen, and then fractured. The fractured surface was observed under a scanning electron microscope and photographed through it (magnification X5000X2/3). As a result, microphotographs shown in Figures 1 to 4 were obtained.

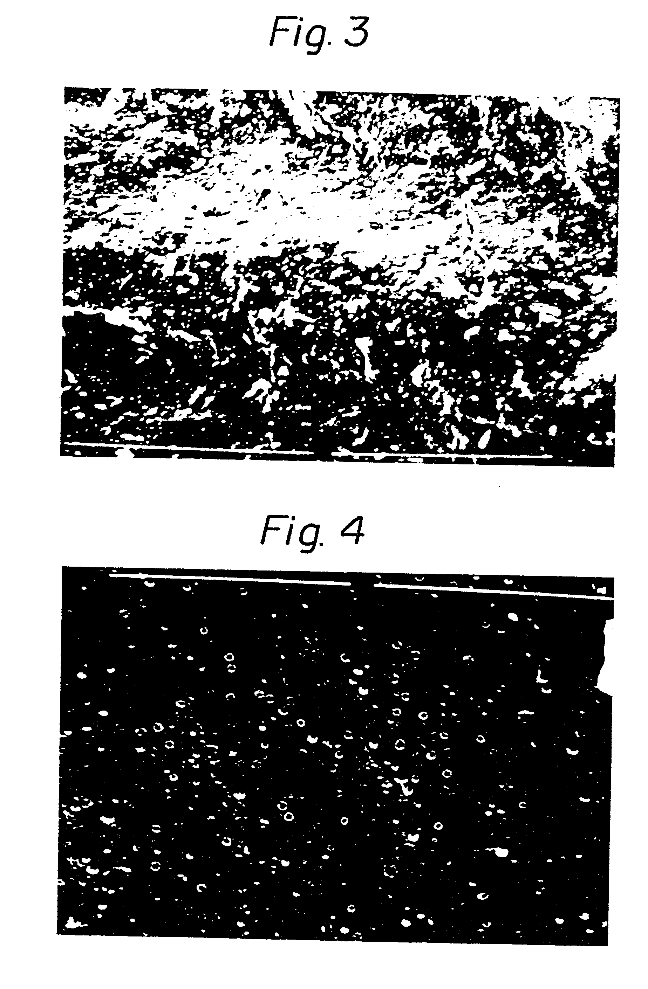

In Figures 1 [paint No. (II)] and 4 [paint No. (XIII)], hollow non-film forming resin particles were obtained because the non-film forming resin emulsions having microvoids obtained in this invention were used. On the other hand, no such resin particles were observed in Figures 2 [paint No. (iii)] and 3 [paint No. (v)].

EXAMPLE 17

The same reaction vessel as used in Example 1 was charged with 62.5 parts of the resin emulsion A-1 obtained in Example 1 and 50 parts of water, and the inside of the vessel was maintained at 70 $^{\circ}$C. A mixture of 0.4 part of ammonium persulfate and 10 parts of water, a mixture of 0.4 part of sodium pyrosulfite and 10 parts of water, and a mixture of 30 parts of butyl acrylate, 10 parts of ethyl acrylate, 28.5 parts of methyl methacrylate, 1 part of acrylic acid and 0.5 part of glycidyl methacrylate were introduced into the reaction vessel over about 3 hours and reacted, and the reaction mixture was aged for 1 hour. It was then cooled, and adjusted to pH 8.6 with 25% aqueous ammonia.

The resulting emulsion was film-forming and had a solids concentration of 40.5 %, a viscosity (measured at 25 $^{\circ}$C by a BM-type viscometer with rotor No. 1 rotating at a speed of 60 rpm) of 80 cps, a pH of 8.5, an average particle diameter, measured by an electron microscope, of 0.4 micrometer and a microvoid diameter of 0.05 to 0.15 micrometer. The emulsion is designated as A-11.

EXAMPLE 18

The same reaction vessel as used in Example 1 was charged with 42.6 parts of the resin emulsion A-2 obtained in Example 2 and 50 parts of water, and the inside of the vessel was maintained at 70 $^{\circ}$C. A mixture of 0.4 part of potassium persulfate and 10 parts of water, a mixture of 0.4 part of sodium pyrosulfite and 10 parts of water, and a mixture of 30 parts of 2-ethylhexyl acrylate, 16 parts of styrene, 10 parts of n-butyl methacrylate, 20 parts of ethyl acrylate, 2 parts of ethylene glycol dimethacrylate and 2 parts of acrylic acid were introduced into the reaction vessel over the course of about 3 hours, and reacted. The reaction mixture was aged for 1 hour, then cooled and adjusted to pH 8.8 with 25 % aqueous ammonia.

The resulting emulsion was film-forming, and had a solids concentration of 50 %, a viscosity (measured at 25 $^{\circ}$C by a BM-type rotating viscometer with rotor No. 1 at a rotating speed of 60 rpm) of 65 cps, a pH of 8.7, an average particle diameter, measured by an electron microscope, of 0.4 micrometer, and a microvoid diameter of 0.05 to 0.15 micrometer. The emulsion was designated as A-12.

EXAMPLES 19-20

Film-forming resin emulsions (A-13 and A-14) were prepared in the same way as in the preparation of A-11 and A-12 except that 9.1 part of Emal 20 as an emulisifier was added to the aqueous phase in performing the polymerization. The properties of the resulting emulsions are shown in Table 7.

Table 7

| Example | Resin emulsion | Emulsion particles as seeds (parts) | Emulsifier (parts) | Monomer composition (parts) | $T_g$ (°C) | Particle diameter ($\mu$m) | Microvoid diameter ($\mu$m) | Viscosity (cps) | pH | Solids concentration (%) |
|---|---|---|---|---|---|---|---|---|---|---|
| 17 | A-11 | A-1 (30) | – | BA /EA /MMA /AA /GMA (30) (10) (28.5) (1) (0.5) | 5 | 0.4 | 0.05 -0.15 | 80 | 8.5 | 48 |
| 18 | A-12 | A-2 (20) | – | 2EHA/St /n-BMA*/EA /EGDM/AA (30) (16) (15) (15) (2) (2) | -5 | 0.4 | 0.05 -0.15 | 65 | 8.7 | 50 |
| 19 | A-13 | A-1 (30) | Emal 20A (0.1) | Same as A-11 | 5 | 0.4 | 0.05 -0.15 | 90 | 8.4 | 48 |
| 20 | A-14 | A-2 (20) | Emal 20A (0.1) | Same as A-12 | -5 | 0.4 | 0.05 -0.15 | 73 | 8.6 | 50 |

* n-BMA: n-Butylmethacrylate

- 40 -

APPLICATION EXAMPLE 5

53.7 Parts of the emulsion A-11 obtained in Example 17, 53.7 parts of the emulsion A-13 obtained in Example 19, 77.3 parts of the emulsion A-12 obtained in Example 18, or 77.3 parts of the emulsion A-14 obtained in Example 20 was mixed with 23.4 parts of a 71 % aqueous dispersion of rutile titanium dioxide. Tributyl phosphate (1.4 parts), 16.5 parts of water and 0.18 parts of hydroxyethyl cellulose were slowly added to the mixture and the mixture was stirred until its viscosity became constant.

The paints so obtained were coated in a given arrangement on a morest hiding power chart to form coated films of the same thickness (0.4 micrometer), and dried in air for 3 days. The physical and chemical properties of the coated films are shown in Table 8.

Table 8

| Paint No. | | | (XIX) | (XX) | (XXI) | (XXII) |
|---|---|---|---|---|---|---|
| Film-forming emulsion | | Type | A-11 | A-13 | A-12 | A-14 |
| | | Average particle diameter (μm) | 0.4 | 0.4 | 0.4 | 0.4 |
| | | Mechanical stability | ○ | ○ | ○ | ○ |
| Paint composition | | Solids concentration (%) | 45 | 45 | 47 | 47 |
| | | PVC (vol.%) | 42.7 | 42.7 | 30.3 | 30.3 |
| | | PWC (%) | 57.5 | 57.5 | 44.0 | 44.0 |
| Properties of the coated film | | Gloss (glass plate) | 80 | 81 | 82 | 82 |
| | | Hiding power ratio | 0.98 | 0.98 | 0.98 | 0.98 |
| | | Gloss (hiding power test paper) | 78 | 78 | 80 | 80 |
| | | Water resistance | ○ | ○ | ○ | ○ |
| | | Gloss retention after water resistance test | 95 | 95 | 94 | 94 |
| | | Alkali resistance | | | | |
| | | Gloss retention after alkali resistance test | 94 | 94 | 94 | 94 |
| | | Washing resistance | ○ | ○ | ○ | ○ |
| | | Weatherability | ○ | ○ | ○ | ○ |
| | | Accelerated weatherability | ○ | ○ | ○ | ○ |

Note:   The properties of the coated film were tested as indicated in Table 2.

Paints Nos. (XIX) to (XXII) were prepared by using the resin emulsions of the invention.

What is claimed is:

1.      A process for producing an emulsion of a vinyl resin having microvoids therein, which comprises using as seed particles 0.1 to 90 parts by weight, as solids, of a polymer emulsion (C) obtained by emulsion polymerization of a polymerizable monovinyl monomer (A) and optionally, a polyfunctional crosslinkable monomer (B), adding to said seed particles a monomeric mixture which is composed of 99.9 to 10 parts by weight of a polymerizable monovinyl monomer (D) and 0 to 50 parts by weight of a polyfunctional crosslinkable monomer (E) and the solubility parameter of which differs from the solubility parameter of the polymer (C) by at least 0.1, and emulsion polymerizing the monomeric mixture.

2.      The process of claim 1 wherein each of the polymerizable monovinyl monomers (A) and (D) contains less than 5 % by weight, based on the total monomer amount, of an alpha,beta-ethylenically unsaturated carboxylic acid or its salt.

3.      The process of claim 1 wherein the copolymer emulsion (C) is used in an amount of 0.5 to 70 parts by weight as solids.

4.      The process of claim 1 wherein the difference of the solubility parameter of the copolymer (C) from that of the monomeric mixture composed of the monomers (D) and (E) is 0.1 to 10.

5.      The process of claim 1 wherein the microvoids have a diameter of 0.1 to 1.0 micron.

6.      A process for powderizing an emulsion of a vinyl resin having microvoids therein, which comprises using as seed particles 0.1 to 90 parts by weight, as solids, of a polymer emulsion (C) obtained by emulsion polymerization of a polymerizable monovinyl monomer (A) and optionally, a polyfunctional crosslinkable monomer (B), adding to said seed particles a monomeric mixture which is composed of 99.9 to 10 parts by weight of a polymerizable monovinyl monomer (D) and 0 to 50 parts by weight of a polyfunctional crosslinkable monomer (E) and the solubility parameter of which differs from the solubility parameter of the polymer (C) by at least 0.1, emulsion polymerizing the monomeric mixture, and powderizing the resulting polymer emulsion.

7.      The process of claim 6 wherein each of the polymerizable monovinyl monomers (A) and (D) contains less than 5 % by weight, based on the total monomer amount, of an alpha,beta-ethylenically unsaturated carboxylic acid or its salt.

8.      The process of claim 6 wherein the copolymer emulsion (C) is used in an amount of 0.5 to 70 parts by weight as solids.

9.      The process of claim 6 wherein the difference of the solubility parameter of the copolymer (C) from that of the monomeric mixture composed of the monomers (D) and (E) is 0.1 to 10.

10.      The process of claim 6 wherein the microvoids have a diameter of 0.1 to 1.0 micron.

*Fig. 1*

*Fig. 2*

*Fig. 3*

*Fig. 4*